(19) **Europäisches Patentamt**
**European Patent Office**
**Office européen des brevets**

(11) **EP 1 769 099 B1**

(12) **EUROPÄISCHE PATENTSCHRIFT**

(45) Veröffentlichungstag und Bekanntmachung des Hinweises auf die Patenterteilung:
**18.02.2015 Patentblatt 2015/08**

(21) Anmeldenummer: **05759892.2**

(22) Anmeldetag: **08.07.2005**

(51) Int Cl.:
*C23C 8/20* (2006.01)    *C23C 8/06* (2006.01)
*C23C 8/08* (2006.01)    *C23C 24/08* (2006.01)
*B23K 26/00* (2014.01)    *C22B 4/00* (2006.01)
*B23K 26/34* (2014.01)    *B23K 31/02* (2006.01)
*C23C 8/24* (2006.01)

(86) Internationale Anmeldenummer:
**PCT/EP2005/007393**

(87) Internationale Veröffentlichungsnummer:
**WO 2006/005527 (19.01.2006 Gazette 2006/03)**

(54) **VERFAHREN ZUR HERSTELLUNG VON VERSCHLEISSBESTÄNDIGEN UND ERMÜDUNGSRESISTENTEN RANDSCHICHTEN IN TITAN-LEGIERUNGEN UND DAMIT HERGESTELLTE BAUTEILE**

METHOD FOR PRODUCING WEAR-RESISTANT AND FATIGUE-RESISTANT EDGE LAYERS FROM TITANIUM ALLOYS, AND CORRESPONDINGLY PRODUCED COMPONENTS

PROCEDE DE FABRICATION DE COUCHES MARGINALES RESISTANTES A L'USURE ET A LA FATIGUE A PARTIR D'ALLIAGES DE TITANE ET COMPOSANTS AINSI FABRIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.07.2004 DE 102004033342**

(43) Veröffentlichungstag der Anmeldung:
**04.04.2007 Patentblatt 2007/14**

(73) Patentinhaber:
• **Fraunhofer-Gesellschaft zur Förderung der angewandten Forschung e.V.**
**80686 München (DE)**
• **Siemens Aktiengesellschaft**
**80333 München (DE)**

(72) Erfinder:
• **BRENNER, Berndt**
**01328 Dresden (DE)**
• **BONSS, Steffen**
**98544 Zella-Mehlis (DE)**
• **TIETZ, Frank**
**01277 Dresden (DE)**
• **KASPAR, Jörg**
**01309 Dresden (DE)**
• **WALTER, David**
**45481 Mühlheim (DE)**

(74) Vertreter: **Grambow, Uwe**
**Pfenning, Meinig & Partner GbR**
**Patent- und Rechtsanwälte**
**An der Frauenkirche 20**
**01067 Dresden (DE)**

(56) Entgegenhaltungen:
**EP-A- 0 829 325    EP-A1- 1 769 099**
**US-A- 5 366 345    US-A- 5 573 604**

• **PATENT ABSTRACTS OF JAPAN Bd. 005, Nr. 106 (C-062), 10. Juli 1981 (1981-07-10) & JP 56 047560 A (HITACHI LTD; others: 01), 30. April 1981 (1981-04-30)**
• **ROBINSON J M ET AL: "Cavitation erosion of laser melted and laser nitrided Ti-6Al-4V" MATERIALS SCIENCE AND TECHNOLOGY UK, Bd. 11, Nr. 6, Juni 1995 (1995-06), Seiten 611-618, XP002348176 ISSN: 0267-0836**
• **BERGMANN H W: "THERMOCHEMISCHE BEHANDLUNG VON TITAN UND TITANLEGIERUNGEN DURCH LASERUMSCHMELZEN UND GASLEGIEREN" ZEITSCHRIFT FUER WERKSTOFFTECHNIK - JOURNAL OF MATERIALS TECHNOLOGY. MATERIALS TECHNOLOGY AND TESTING, VCH, WEINHEIM, DE, Bd. 16, 1985, Seiten 392-405, XP002049216 ISSN: 0049-8688**

EP 1 769 099 B1

**Beschreibung**

Die Erfindung bezieht sich auf die Randschichtveredlung von Funktionsbauteilen und dabei insbesondere auf ein Verfahren zur Herstellung von verschleißbeständigen und ermüdungsresistenten Randschichten in Titan-Legierungen und auf damit hergestellte Bauteile. Objekte, bei denen ihre Anwendung möglich und zweckmäßig ist, sind stark Erosions-, Kavitations-, Tropfenschlag- oder Gleitverschleiß-belastete Bauteile aus Titan-Legierungen, die neben ihrer tribologischen Belastung auch einer hohen zyklischen Belastung unterworfen sind. Besonders vorteilhaft ist die Erfindung zum Schutz von Turbinenschaufeln aus dem Niederdruckbereich von Dampfturbinen einsetzbar. Andere, damit sehr vorteilhaft zu veredelnde Bauteile sind beispielsweise Komponenten aus der Luft- und Raumfahrt, wie beispielsweise Landeklappenführungen, Antriebswellen, Bauteile des Hydrauliksystems, Bolzen oder ähnliche Verbindungselemente; Teile aus dem chemischen Apparatebau (beispielsweise Sonotrodenspitzen, sonochemische Anlagen), der Medizintechnik (beispielsweise Instrumente, Implantate) und dem Hochleistungsmotorenbau (beispielsweise Einspritzsysteme, Ventilsitze, Ventilschäfte oder ähnliche).

Titan ist ein hervorragender Konstruktionswerkstoff, dessen hohe spezifische Festigkeit, ausgezeichnete Dauerschwingfestigkeit, gute Spannungsrisskorrosionsbeständigkeit, chemische Beständigkeit und Biokompatibilität ihn für verschiedene Sonderanwendungen prädestiniert. Einer größeren Einsatzbreite steht jedoch vielfach seine geringe Beständigkeit gegenüber verschiedenen Verschleißarten entgegen. Der Bedarf an effektiven Verschleißschutzverfahren wird noch dadurch verschärft, dass viele thermische und chemothermische Randschichtveredlungsverfahren, die zum Beispiel (z. B.) für Stahlwerkstoffe verwendet werden, für Titan-Legierungen nicht einsetzbar sind.

Ein moderneres, bekanntes Verfahren, um sehr verschleißbeständige Randschichten auf Titan und seinen Legierungen zu erzeugen, stellt das Lasergaslegieren dar (vgl. z. B. H. W. Bergmann: "Thermochemische Behandlung von Titan und Titanlegierungen durch Laserumschmelzen und Gaslegieren", Zeitschrift für Werkstofftechnik 16 (1985), S. 392-405). Eine frühe Anwendung dieser Technologie bestand im Schutz von Gelenkendoprothesen wie in DE 39 17 211 beschrieben. Dazu wird das Bauteil durch den Laserstrahl bis auf eine Tiefe von 0,1 bis 0,7 mm aufgeschmolzen und gleichzeitig Stickstoff in die Schmelze eingeblasen. Wegen der hohen Affinität des Titans zu reaktiven Gasen wie zum Beispiel Stickstoff, wird das Gas sofort von der Schmelze gelöst und bildet im Fall des Stickstoffes Titannitrid, das sich in Form von Dendriten aus der Schmelze ausscheidet. Nach der Erstarrung besteht die Randschicht aus einer metallischen Matrix aus Titan mit einem gegenüber dem Ausgangszustand veränderten $\alpha/\beta$-Anteil sowie feinverteilten Titannitrid-Dendriten. Die Härte der Randschicht beträgt üblicherweise 600-1200 HV. Solcherart hergestellte Randschichten widerstehen sehr gut einer Gleitverschleiß-, Abrasiv- oder Oszillationsgleitverschleißbeanspruchung.

Ohne Einschränkung der Allgemeinheit soll der Nachteil solcherart hergestellter Randschichten an dem Einsatzfall Erhöhung der Tropfenschlagverschleißbeständigkeit von Dampfturbinenschaufeln hergeleitet werden.

Laufschaufeln von Niederdruck-Stufen in Dampfturbinen unterliegen während ihres Einsatzes extrem hohen quasistatischen (Fliehkraft, Schaufelverwindungen), zyklischen (periodische Dampfdruckbeaufschlagung, Schaufelschwingungen), mechanisch-chemischen (Schwingungs- und Spannungsrisskorrosion) und tribologischen (Tropfschlag) Beanspruchungen. Während ausgewählte Titanlegierungen wie z. B. Ti6Al4V sehr gut den quasistatischen, zyklischen und mechanisch-chemischen Beanspruchungen widerstehen, ist ihre Tropfenschlagverschleißbeständigkeit nicht ausreichend, um stark belastete Dampfturbinenschaufeln vor dem Verschleißabtrag durch den ständigen Aufprall von Wassertröpfchen in der Nähe der Eintrittskante wirkungsvoll zu schützen.

In Analogie zu o. a. Stand der Technik beansprucht Gerdes die Anwendung des Lasergaslegierens zur Steigerung der Verschleißbeständigkeit von Niederdruck-Dampfturbinenschaufeln (siehe dazu EP 0491075 B1). Dabei wird dem Schmelzbad ein Boride, Karbide oder Nitride bildendes Gas in einer Konzentration zugeführt, die zum Ausscheiden von Boriden, Karbiden oder Nitriden in der Schmelze führt. Im Fall von Stickstoff als Reaktionsgas wird mit Volumenanteilen von Stickstoff zu Inertgas von typischerweise 20 bis 60 % extrem hartes Titannitrid gebildet. Dadurch wird in der Randschicht der Legierung Ti6Al4V bei den angegebenen Behandlungsparametern eine Härte von 500 bis 900 HV, vorzugsweise von 500 bis 700 HV erreicht. Angaben zur erreichten Verschleißbeständigkeit und Dauerschwingfestigkeit werden nicht gemacht.

Zur Vermeidung von Rissen wird die Dicke der Schutzschicht auf 0,4 bis 1,0 mm beschränkt. Eine mechanische oder thermische Nachbehandlung der so erzeugten Schichten wird nicht erwähnt, sie sollte aber auch nicht vorgesehen sein, da besonders darauf hingewiesen wird, dass der Schutz gegen Tropfenerosion mit einem einzigen Verfahrensschritt, nämlich dem Lasergaslegieren erreicht wird.

Aus eigenen Untersuchungen ist bekannt, dass an Proben aus der gleichen Legierung Ti6Al4V die mit einem Stickstoffanteil von 25 % bzw. 35 % lasergaslegiert wurden, nur Dauerschwingfestigkeiten von ca. 67 % bzw. 37 % des Grundwerkstoffes erreicht werden.

Der Mangel des Verfahrens besteht demzufolge darin, dass eine solcherart randschichtveredelte Turbinenschaufel eine viel zu geringe zyklische Belastbarkeit aufweist. Damit kann das Verfahren nicht für zyklisch hochbeanspruchte Turbinenschaufeln eingesetzt werden.

Ein weiterer Mangel resultiert aus der sehr begrenzten Tiefe der Schutzschicht von 0,4 bis1,0 mm. Bei abtragenden Verschleißarten, wie z. B. dem Tropfenschlagverschleiß an Turbinenschaufeln resultiert daraus eine Begrenzung der Lebensdauer.

Die Ursache des Mangels besteht darin, dass sich bei Stickstoffgehalten größer als 20 % im Gasgemisch Mikrorisse bilden. Die Tendenz zur Mikrorissbildung nimmt mit der Dicke der Schutzschicht zu. Darüber hinaus ist das heterogen aufgebaute Gefüge aus einer relativ spröden Matrix aus $\alpha$-Titan mit eingelagerten, sehr harten TiN-Partikeln, prinzipiell nicht für das Erreichen hoher Dauerschwingfestigkeiten geeignet.

Zur Verbesserung der Dauerschwingfestigkeit bei Beibehaltung der sehr guten Verschleißbeständigkeit unter Tropfenschlagbeanspruchung ist bekannt geworden, die Bauteile nach dem Lasergaslegieren einer kombinierten nachträglichen Wärmebehandlung und anschließenden Kugelstrahlbehandlung zu unterziehen (siehe dazu Gerdes EP 0697503 A1). Dabei wird die durch Lasergaslegieren in einer Bor-Kohlenstoff- oder Stickstoff-haltigen Gasatmosphäre auf Basis eines Titanborids, - carbids und/oder -nitrids gebildete Schutzschicht unter Bildung einer vanadiumreichen $\beta$-Titanphase bei einer Temperatur zwischen 600 und 750 C wärmebehandelt. Wird Stickstoff als Reaktionsgas gewählt, kann dann in Kombination mit einem mechanischen Polieren und nachfolgender Kugelstrahlbehandlung mit einer Almenintensität von 0,3 mmA und mindestens zweifacher Überdeckung unter Beibehaltung der Verschleißbeständigkeit die Dauerschwingfestigkeit von ca. 30 % auf ca. 85 % des Ausgangswertes des unbehandelten Schaufelwerkstoffes angehoben werden. Die eine Dicke zwischen 0,4 mm und 1,0 mm aufweisende Schutzschicht enthält im Wesentlichen Titannitride, die in eine Matrix aus $\alpha$-Titan eingebettet sind. Morphologie und Verteilung der Titannitride hängen von den Verfahrensparametern beim Lasergaslegieren und von der Stickstoffkonzentration in der Gasatmosphäre ab. Je nach der Stickstoffkonzentration sollen die Titannitride plattenförmig oder dendritisch ausgebildet sein. Wenn Stickstoff als Reaktionsgas und Argon als Inertgas verwendet werden, sollen die Anteile zwischen 1:4 bis 1:2 betragen, das heißt, der Stickstoffgehalt zwischen 20 % und 33 % liegen. Die gebildete Schutzschicht kann dann je nach den Bedingungen beim Lasergaslegieren eine Vickershärte von 600 bis 800 HV aufweisen.

Der Mangel dieses weiterentwickelten Verfahrens liegt darin, dass die angegebenen Dauerschwingfestigkeiten nur an polierten Proben oder neuen Schaufeln erreicht werden können. Eine charakteristische Erscheinung des Tropfenschlagverschleißes besteht allerdings in der starken Aufrauung der Oberfläche, die schon sehr zeitig in der Lebensdauer einer Turbinenschaufel auftritt. Diese Aufrauung hat drei nachteilige Konsequenzen für die zyklische Belastbarkeit der Turbinenschaufel: Erstens steigt die Kerbwirkung des hochaufgehärteten Werkstoffzustandes. Zweitens werden durch die Aufrauung die oberflächennahen Druckeigenspannungen der Kugelstrahlbehandlung abgebaut. Darüber hinaus ist es möglich, dass die negative Auswirkung der Mikrorisse, die ja weiterhin vorhanden sind, deren Auswirkungen jedoch durch das Kugelstrahlen beseitigt wurden, wieder zu Tage tritt.

Die Ursache des Mangels dieses weiterentwickelten Verfahrens liegt demzufolge darin, dass die Ursachen der verringerten Dauerschwingfestigkeit des Gefüges - die Entstehung von Mikrorissen und eines für höhere zyklische Belastungen nicht ausreichend gut geeigneten heterogenen Gefüges mit sehr harten und spröden Phasen - nicht beseitigt werden, sondern nur deren Auswirkungen mit temporärem Effekt begegnet wird.

Ein weiterer Mangel des Verfahrens resultiert daraus, dass die Verbesserung der Dauerschwingfestigkeit wie dort beschrieben eine Vanadinhaltige Titanlegierung voraussetzt. Es gibt aber eine Reihe wirtschaftlich bedeutsamer Titanlegierungen mit ähnlichem Anwendungsspektrum, die kein Vanadin enthalten.

Die Ursache des Mangels liegt darin begründet, dass die beanspruchte Wärmebehandlung dazu dienen soll, eine Vanadin-reiche Phase zu bilden, die eine $\beta$-Titan-Gitterstruktur aufweist.

Von J.M. Robinson "Cavitation erosion of laser melted and laser nitrided Ti-6Al-4V", Materials Science and Technology, Juni 1995, Vol. 11 sind Untersuchungen zum Lasergaslegieren mit Stickstoffanteilen von 10 % und 20 % bekannt gemacht worden, bei denen das Verhalten bei Kavitation bewertet wurde.

Die US 5,573,604 betrifft eine Vorrichtung zum Lasergaslegieren von Titan und seiner Legierungen mit einer gasdichten Reaktionskammer.

Die Ausbildung von TiN unter Einsatz von Stickstoff mit Argon oder Helium bei Temperaturen im Bereich 800 °C bis 950 °C ist in JP 56047560 erwähnt.

Das Ziel der vorliegenden Erfindung ist es nun, ein Verfahren zur Verbesserung der Verschleißbeständigkeit von Titan-Legierungen anzugeben, das sowohl zu einem möglichst geringen Abfall der zyklischen Belastbarkeit des gaslegierten Zustandes gegenüber dem Ausgangszustand führt, als auch einen besseren Erhalt der zyklischen Belastbarkeit während des fortschreitenden Verschleißes gestattet. Darüber hinaus sollen mit diesem Verfahren vorteilhaft herstellbare verschleißbeständige und ermüdungsresistente Bauteile angegeben werden.

Der vorliegenden Erfindung liegt demnach die Aufgabe zugrunde, ein Randschichtveredlungsverfahren anzugeben, das es gestattet, unabhängig von dem Vanadingehalt der Titanlegierung einen homogenen und zähharten Gefügezustand ohne die Anwesenheit von spröden Titannitrid-Phasen einzustellen, eine sehr gute Beständigkeit gegenüber nichtabrasiver, kavitativer oder Tropfenschlag-Verschleißbelastung zu erreichen und auch größere Schichtdicken als 1 mm ohne die Bildung von Mikrorissen zu realisieren.

Erfindungsgemäß wird diese Aufgabe mit einem Verfahren zur Herstellung von verschleißbeständigen und erosionsbeständigen Randschichten in Titan-Legierungen gemäß Anspruch 1, gelöst. Ein erfindungsgemäßes Bauteil wird mit dem Anspruch 11 definiert. Vorteilhafte Ausgestaltungen sind in den jeweiligen untergeordneten Ansprüchen dargestellt.

Wie in Anspruch 1 dargelegt, geht das Verfahren davon aus, in der Schmelze lösbare und nach der Erstarrung interstitiell gelöste gasförmige Elemente bis zu einer Konzentration in die Schmelze einzubringen, bei der noch keine nitridischen-Phasen entstehen. Dadurch entsteht im Gegensatz zum bekannten Stand der Technik ein vergleichsweise homogenes und feinkörniges Gefüge mit Strukturlängen von einigen Mikrometern, aus α-Titan-Körnern, einzelnen β-Titan-Körnern und einer zwischen den α-Titan-Körnern befindlichen Anordnung einer Mischung sehr feiner α-Titan- und β-Titan-Körner. Dadurch können die bisher hinsichtlich ihrer negativen Auswirkungen auf Mikrorissbildung und Entstehung von lokalen Spannungskonzentrationen bekannten nitridischen-Phasen vermieden werden.

Stickstoff als interstitiell einzubringendes Element soll mit einem Volumenanteil im Bereich 1 bis < 10 % in einem Arbeitsgasgemisch enthalten sein. Die konkrete Wahl richtet sich dabei nach dem Spurüberlappungsgrad ü und dem Ausmaß von Verschleißbeanspruchung relativ zu der Höhe der zyklischen Belastung. Generell werden für erhöhte zyklische Belastungen bei geringerer Verschleißbelastung niedrige Stickstoffgehalte gewählt und umgekehrt. Ebenso werden für höhere Spurüberlappungsgrade niedrige Stickstoffgehalte eingestellt.

Da normalerweise die Verschleißbelastung und die Ermüdungsbelastung entlang der Bauteiloberfläche variieren und sich zudem ihr Verhältnis ändert, ist es besonders vorteilhaft, so wie in Anspruch 5 beschrieben, durch eine Variation des Stickstoffgehaltes im Arbeitsgas das optimale Verhältnis von Festigkeit und Zähigkeit lokal anzupassen.

Eine weitere Einflussgröße auf die Einstellung des Verhältnisses zwischen Festigkeit und Zähigkeit kann, wie in den Ansprüchen 6-8 aufgeführt, durch die Wahl der Abkühlgeschwindigkeit genutzt werden.

Während des Gaslegierens kommt es insbesondere bei größeren Tiefen der verschleißbeständigen Randschicht und/oder größeren Spurüberlappungsgraden zu einem merklichen Verzug des Bauteiles infolge der intensiven lokalen Energieeinwirkung. Zur Verringerung bzw. Beseitigung des Verzuges in verzugsempfindlichen Bauteilen ist vorgesehen, so wie in den Ansprüchen 5 und 6 angegeben, das Bauteil vor dem Beginn des Gaslegierens in einer Ausgangslage mechanisch zu fixieren und diese Fixierung während der Behandlung aufrecht zu erhalten. Dieses Vorgehen hat darüber hinaus den Vorteil, dass die Zielkoordinaten für den Laserstrahl während der Behandlung nicht wegwandern und deshalb das CNC-Programm nicht nachkorrigiert zu werden braucht.

Nach dem Gaslegieren weist die Oberfläche eine Rauigkeit auf, die in der Regel für zyklisch hoch beanspruchte Bauteile zu groß ist, weshalb in Anspruch 6 eine mechanische Nachbearbeitung vorgesehen ist. Die mechanische Nachbearbeitung kann durch Schleifen, Gleitschleifen und/oder Polieren erfolgen.

Durch die in den Ansprüchen 7 und 8 angegebenen Wärmebehandlungen können die mechanischen Eigenschaften insbesondere die Dauerschwingfestigkeit weiter verbessert werden. Während mit der Verfahrensweise nach Anspruch 8 sowohl auf die Gefügeausbildung infolge Phasenumwandlungen und Aushärtung als auch auf den gleichzeitigen Abbau der nach dem Gaslegieren verbleibenden Zugeigenspannungen Einfluss genommen wird, kann durch die in Anspruch 9 angegebene Verfahrensweise der Eigenspannungszustand ohne wesentliche Änderungen am Gefüge verbessert werden. Da sich die letztere Verfahrensweise vorwiegend auf die Dauerschwingfestigkeit, die Verfahrensweise nach Anspruch 8 sich aber sowohl auf die Verschleißbeständigkeit als auch die Dauerschwingfestigkeit auswirkt, kann durch die Wahl der Art der Wärmebehandlung eine verbesserte Eigenschaftskombination erreicht werden.

Von den Titan-Legierungen ist bekannt, dass ihre zyklische Belastbarkeit insbesondere durch oberflächennahe Druckeigenspannungen verbessert werden kann. Diese können durch die oben aufgeführte Wärmebehandlung nicht eingestellt werden. Deshalb sieht Anspruch 10 als weitere Maßnahme zur Steigerung der Dauerschwingfestigkeit ein Kugelstrahlen der verschleißbeständigen Randschicht vor.

Nach dem bisherigen Stand der Technik wird das Gaslegieren von Titan mit einem Laser als Energiequelle hinreichend hoher Leistungsdichte durchgeführt. Für geeignete Bauteile ist es jedoch auch möglich, als Energiequelle einen non-vac Elektronenstrahl oder eine Plasmaquelle zu verwenden. In diesem Fall muss über Blendensysteme auf eine sorgfältige und reproduzierbare Zuführung des Arbeitsgasgemisches, bestehend aus Reaktionsgas und Inertgas geachtet werden.

Im Anspruch 11 werden vorteilhafte Abmessungen und Härten der Randschicht für erfindungsgemäße Bauteile sowie die dazu nötige Ausbildung der Verschleißschutzzone und Gefügemerkmale angegeben.

Ist die nötige Breite der Verschleißschutzzone größer als die normalerweise mögliche Spurbreite, können wie in den Ansprüchen 12 und 13 beschrieben, überlappende Spurmuster erzeugt oder breitere Spuren durch ein schnelles Oszillieren des Strahles der Energiequelle quer zur Vorschubrichtung des Bauteiles realisiert werden. Erforderlichenfalls kann in Einzelfällen an Stelle des Strahles auch das Bauteil in eine oszillierende Bewegung versetzt werden.

Besonders vorteilhaft lässt sich die Erfindung wie in Anspruch 14 ausgeführt, an Tropfenschlag- oder Erosionsbelasteten Turbinenschaufeln anwenden. Die nachfolgenden Ansprüche 15 bis 20 geben technisch sinnvolle und günstige Ausgestaltungen der Form, Lage und Erzeugung der verschleißbeständigen Randschicht an.

Ohne Einschränkungen der Allgemeinheit wird die Erfindung nachstehend an einem Verfahrensbeispiel und einem Bauteilbeispiel erläutert.

**Beispiel 1:**

Funktionsteile von sonochemischen Apparaturen unterliegen während ihres Betriebes neben der kavitativen auch einer hohen zyklischen Belastung. Insbesondere die Lebensdauer der Sonotroden wird durch die kavitative Belastung drastisch reduziert. Die Sonotrode besteht aus dem Werkstoff Ti6Al4V und weist im Ausgangszustand eine Härte von 340 HV0,5 auf.

Zur Erhöhung ihrer Lebensdauer sollen die Sonotrodenspitze und die angrenzenden Bereiche der Zylindermantelfläche besser vor kavitativer Belastung bei der Gewährleistung einer ausreichend hohen zyklischen Belastbarkeit geschützt werden. Zur Durchführung des erfindungsgemäßen Lasergaslegierens wird die Sonotrode in ein Dreibackenfutter einer CNC-Drehachse einer Laserbearbeitungsanlage platziert. In dem zu behandelnden Bereich weist die Sonotrode ein Aufmaß von 0,2 mm auf. Über dem Bauteil befindet sich eine gemäß EP 0829325 gestaltete Schutzgasglocke. Sie gewährleistet ohne großen gerätetechnischen Aufwand die reproduzierbare Einstellung des Arbeitsgasgemisches bei sehr gutem Sauerstoffausschluss. Mit Hilfe einer Gasmischstation wird in sie ein voreingestelltes Stickstoff-Argon-Gemisch im Volumenverhältnis 9 % : 91 % eingeblasen. Die Schutzgasglocke ist an der Strahlformungseinheit des Lasers in z-Richtung verschiebbar befestigt. Mit einem Luftkissen an ihrer unteren Berandung ist sie in den beiden anderen Richtungen x und y gegenüber dem Bauteil beweglich.

Als Laser wird ein $CO_2$-Laser verwendet, dessen Leistung auf 3,1 kW eingestellt wird. Der Abstand des Laserstrahl-Fokus zur Bauteiloberfläche wird so gewählt, dass der Laserstrahl auf der Bauteiloberfläche einen Strahldurchmesser von 3,8 mm aufweist. Damit ergibt sich eine Spurbreite der lasergaslegierten Zone von a = 3,5 mm. Als Spurabstand c wird ein Abstand von 0,75 mm eingestellt, woraus sich ein Spurüberlappungsgrad ü = 0,75 ergibt. Über das CNC-Programm wird eine Vorschubgeschwindigkeit von 540 mm/min vorgewählt. Nach 90 s Spülen mit dem Arbeitsgasgemisch wird der Prozess durch den Start des CNC-Programms, das die Sonotrodenspitze rasterförmig abfährt und das Zuschalten des Lasers gestartet. Nach dem langsamen Abkühlen wird die Sonotrode der Apparatur entnommen und das Aufmaß im laserbehandelten Bereich abgeschliffen.

Die so erzeugte Schicht besteht aus einer relativ homogenen Umschmelzschicht einer Tiefe von $t_R$ = 0,5 mm und einer darunter liegenden 1,2 mm dicken Wärmeeinflusszone. Die Oberflächenhärte $H_s$ erreicht ca. 440 HV0,5. Das entspricht etwa einer Randschichthärte

$H_R$ von ca. 510 HV0,1, gemessen am polierten Querschliff 0,1 mm unter der Oberfläche. Die Härteschwankung quer zu den Spuren beträgt ca. . 50 HV0,1.

Das Gefüge besteht aus $\alpha$-Titan-Körnern und feindispersen Ausscheidungen aus $\alpha$- und $\beta$-Titan an den Korngrenzen der $\alpha$-Titan-Körner. Die Größe der $\alpha$-Titan-Körner beträgt maximal einige Mikrometer.

Diese Behandlung gestattet die Reduzierung der Verschleißrate an der Sonotrodenspitze um ca. den Faktor 3.

In diesem Fall ist die so erreichte zyklische Belastbarkeit ausreichend, so dass keine weitere Maßnahme zur Steigerung der Dauerschwingfestigkeit angeschlossen werden braucht.

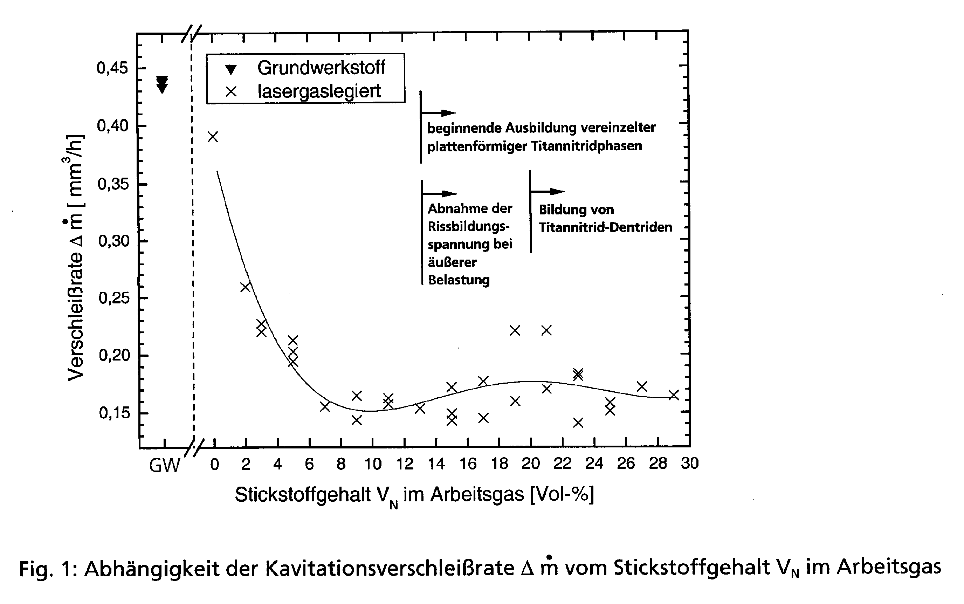

In Figur 1 wird die Abhängigkeit der Verschleißrate $\Delta \dot{m}$ vom Volumenanteil des Stickstoffes $V_N$ im Arbeitsgas dargestellt. Die Kavitationsverschleißbelastung erfolgte in Anlehnung an ASTM G32-85 mit einem Hochfrequenzgenerator VC501 der Firma Sonics & Materials Inc. Die Versuchsparameter betragen: indirekte schwingungskavitative Beanspruchung der Proben; Frequenz: 20 kHz, Amplitude: $\pm$ 20 $\mu$m, Wassertemperatur (geregelt) : 22 °C $\pm$ 1K, Eintauchtiefe der Probenoberfläche: 12...16 mm; Abstand Sonotrodenfläche - Probenoberfläche: 0,5 mm, Belastungsdauer: 20 h, Messung des Masseabtrages aller 1,5 h. Die Verschleißrate wird bestimmt aus der Steigerung der Masseverlust-Zeit-Kurve nach dem Ende der Inkubationszeit.

Aus Figur 1 ist deutlich zu entnehmen, dass der Widerstand gegen Kavitationsverschleiß, wie schon bisher bekannt, durch ein Lasergaslegieren mit Stickstoff wesentlich verbessert werden kann. Entgegen dem Vorurteil der Fachwelt ist dazu jedoch nicht die Ausscheidung von Titannitrid nötig. Schon mit Stickstoffgehalten von 7 bis 13 % werden ähnlich gute Verschleißeigenschaften wie mit Stickstoffgehalten größer als 20 % erreicht. Im Gegenteil konnte festgestellt werden, dass die Ausbildung von Ausscheidungen aus dendritischem Titannitrid die einsinnige mechanische (Rissbildungsspannung) und zyklische Belastbarkeit (Dauerschwingfestigkeit) sehr negativ beeinflusst. So beginnt bei den gewählten Versuchsparametern z. B. die Rissbildungsspannung der Randschicht bei Biegebelastung schon oberhalb 13 % Stickstoffgehalt, also deutlich vor der Ausscheidung von Titannitrid-Dendriten abzunehmen. Dieser Grenzwert gilt für die angegebenen Versuchsbedingungen. Mit abnehmendem Überlappungsgrad verschiebt er sich zu höheren Stickstoffgehalten.

**Beispiel 2:**

Ein erfindungsgemäßes Bauteil soll an Hand einer Endstufen-Laufschaufel einer großen Dampfturbine erläutert werden. Die Eintrittskanten dieser Laufschaufeln unterliegen einer intensiven Tropfenschlagbelastung, die in ihrer Bauteilbeanspruchung, ihren Verschleißerscheinungen und ihren Mechanismen der lokalen Werkstoffschädigung viele Gemeinsamkeiten mit dem Kavitationsverschleiß aufweisen. Verfahren und Werkstoffzustände, die verbesserte Kavitationsverschleißbeständigkeiten liefern, weisen auch verbesserte Beständigkeiten gegen Tropfenschlagverschleiß auf.

Wegen der hohen Fliehkraftbeanspruchung wird die Endstufen-Laufschaufel aus der Titanlegierung Ti6Al4V hergestellt. Die Verschleißzonenbreite beträgt auf der Schaufelrückenseite 17 mm und auf der Schaufelbauchseite 6 mm. Wegen der hohen zyklischen Belastung der Schaufel scheiden andere passive Schutzverfahren, wie das Auflöten von Stellitplatten, das Elektrofunkenbeschichten, das Vakuumplasmaspritzen oder ein nach dem Stand der Technik durchgeführtes Lasergaslegieren aus.

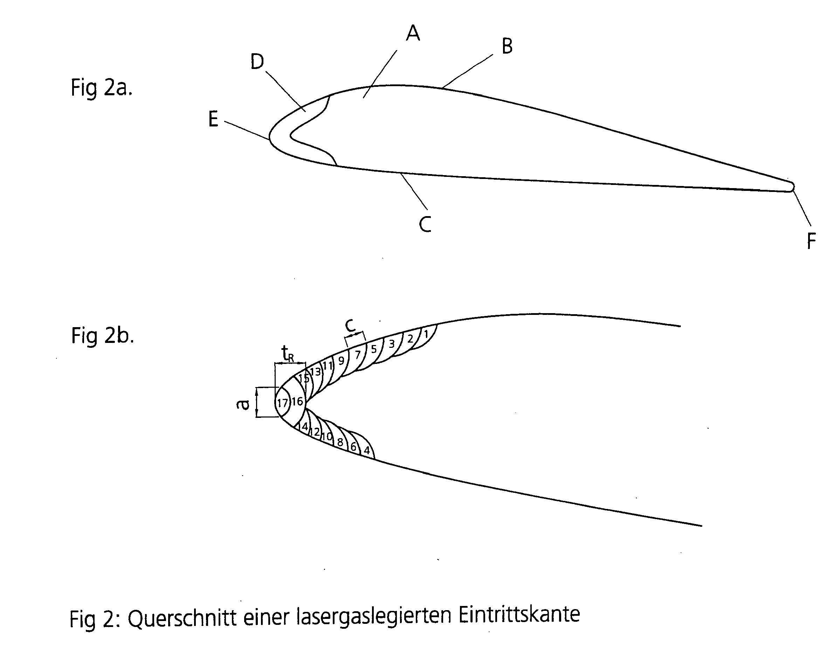

Das erfindungsgemäß ausgeführte Bauteil (siehe Figur 2) weist eine bis zu $t_R \approx 2{,}5$ mm tiefe Schicht, bestehend aus einer feinkörnigen Mischung von $\alpha$- und $\beta$-Titan-Körnern mit interstitiell gelöstem Stickstoff auf. Diese Randschicht ist auf der Schaufelrückenseite 20 mm und auf der Schaufelbauchseite 10 mm breit und überdeckt damit eine Bereich der größer ist, als die Verschleißzonenbreite. Die Spurbreite beträgt a = 3,7 mm, der Spurabstand c = 0,8 mm. Als Laserleistung werden 4,2 kW bei einer Vorschubgeschwindigkeit von 650 mm/min gewählt.

Die Menge des interstitiell gelösten Stickstoffs korreliert direkt mit der Oberflächenhärte $H_S$ bzw. der Randschichthärte $H_R$. Die Schicht weist eine Oberflächenhärte von $H_S \approx 425$ HV0,5 auf. Die 0,1 mm unter der Oberfläche am polierten Querschliff gemessene Härte beträgt $H_R \approx 550$ HV0,1. Diese Härte wird mit einem Stickstoffanteil $V_N = 7$ % im Arbeitsgas erreicht.

Aus eigenen Experimenten ist bekannt, dass die Dauerschwingfestigkeit mit dem gelösten Stickstoffanteil sinkt. Andererseits ist bekannt, dass an Positionen an der Turbinenschaufel in der Nähe der Schaufelspitze die höchsten Verschleißbelastungen, aber sehr geringe zyklische Belastungen herrschen. Entlang der Schaufeleintrittskante nimmt, ausgehend von der Schaufelspitze, die Verschleißbelastung ab, während die zyklische Belastung stark zunimmt. Diesem Umstand wird in einer weiteren Fortbildung der erfindungsgemäßen Lösung dadurch Rechnung getragen, dass der Volumenanteil $V_N$ von Stickstoff im Arbeitsgas schaufelpositions-abhängig eingestellt wird, das heißt der Stickstoffanteil wird, beginnend mit einem Startwert von $V_N = 11$ % an der Schaufelspitze auf einen Anteil von $V_N = 0$ % am Ende der laserbehandelten Zone abgesenkt. Dadurch werden gleichzeitig ein sanfterer Härteübergang und eine Reduzierung der Zugeigenspannungen am Ende des Spurfeldes erreicht. Gleichermaßen kann durch spurweise Veränderung des Volumenanteiles $V_N$ ein ähnlicher Härte- und Eigenschaftsgradient beim Erzeugen der Spuren 1, 2, 3 usw. bzw. 4, 6, 8 usw. (siehe Fig. 2b) an der seitlichen Berandung des Bearbeitungsbereiches erreicht werden.

Durch die Ausbildung von thermischen Spannungen während der Schaufelbearbeitung entsteht ein Verzug, der in Richtung des geringsten Biegemoments normalerweise intolerabel groß ausfällt. Dem wird dadurch entgegengewirkt, dass die verschleißbeständige Zone aus einzelnen, überlappenden Spuren aufgebaut ist und die Reihenfolge der Spurerzeugung so gewählt wird, dass nach einer gewissen Anzahl von Startspuren (siehe Fig. 2b, 2 Startspuren 1, 2), die weiteren Spuren alternierend auf der Schaufelbauch- und der Schaufelrückenseite aufgebracht werden. Um den Verzug zu minimieren, werden unter Umständen auf der Schaufelbauchseite mehr Spuren aufgebracht als von den Abmessungen der Verschleißzone auf der Schaufelbauchseite her nötig wären. Die letzte Spur wird entlang der Eintrittskante aufgebracht. Unter Umständen wird sie mit geringerer Umschmelztiefe und höheren Vorschubgeschwindigkeiten erzeugt. Zusätzlich zu diesen Maßnahmen zur Verzugsverringerung wird die Turbinenschaufel vor dem Beginn der Behandlung mechanisch fixiert und während des Gaslegierens im fixierten Zustand gehalten.

Aufstellung der verwendeten Bezugzeichen und Begriffe:

| | |
|---|---|
| A | - Turbinenschaufel |
| B | - Schaufelrückenseite |
| C | - Schaufelbauchseite |
| D | - Verschleißschutzzone; lasergaslegierte Randschicht |
| E | - Eintrittskante |
| F | - Austrittskante |
| $H_S$ | - Oberflächenhärte, gemessen nach Vickers mit 5 N Last auf der geschliffenen Oberfläche, Härtemittelwert von 10 Messungen |
| $H_R$ | - Randschichthärte gemessen nach Vickers mit 1 N Last am polierten Querschliff entlang einer Spur 0,1 mm unterhalb der Oberfläche, Mittelwert über den Spurabstand und 21 Messungen |
| $T_A$ | - Temperatur der Auslagerungswärmebehandlung |
| $T_{SR}$ | - Temperatur der Spannungsarmglühung |
| $V_N$ | - Volumenanteil des Stickstoffs im Arbeitsgasgemisch |
| a | - Spurbreite |
| c | - Spurabstand |
| $t_A$ | - Glühzeit der Auslagerungswärmebehandlung |
| $t_R$ | - Spurtiefe |
| $t_{SR}$ | - Glühzeit des Spannungsarmglühens |
| ü | - Überlappungsgrad |
| $\Delta \dot{m}$ | - Verschleißrate |
| 1...17 | - Spurnummer |

**Patentansprüche**

1. Verfahren zur Herstellung von verschleißbeständigen und ermüdungsresistenten Randschichten in Titan-Legierungen durch Gaslegieren, bei dem das Gaslegieren mit Stickstoff als Reaktionsgas unter Verwendung eines Lasers, einer non-vac-Elektronenstrahlanlage als Energiequelle hoher Intensität oder eines Plasmabrenners durchgeführt wird, der in der verwendeten Titanlegierung interstitiell lösbar ist, wobei der Partialdruck des Stickstoffs in einem Arbeitsgasgemisch mit einem Inertgas mit einem Volumenanteil $V_N$ im Bereich 1 % bis < 10 % gehalten wird, so dass keine nitridischen Titan-Phasen entstehen und eine maximale Härte von 560 HV an einem Querschliff gemessen 0,1 mm unter der Oberfläche erreicht wird und wobei der Volumenanteil $V_N$ des Stickstoffs im Arbeitsgasgemisch während der Bearbeitung geändert und den lokalen Belastungsbedingungen sowie dem Verhältnis von Verschleiß- zu zyklischer Beanspruchung angepasst wird
und/oder
der Volumenanteil an dem zugeführten Stickstoff unter Berücksichtigung des Spurüberlappungsgrades ü gewählt wird und dabei bei höheren Spurüberlappungsgraden niedrigere Stickstoffgehalte eingestellt werden.

2.  Verfahren nach Anspruch 1, **dadurch gekennzeichnet, dass** die gaslegierte Randschicht einer beschleunigten Abkühlung unterworfen wird.

3.  Verfahren nach Anspruch 2, **dadurch gekennzeichnet, dass** die beschleunigte Abkühlung durch eine Selbstabschreckung infolge einer externen Kühlung der nicht behandelten Bauteilpartien während des Gaslegierens erreicht wird.

4.  Verfahren nach Anspruch 2, **dadurch gekennzeichnet, dass** die beschleunigte Abkühlung durch eine der Lasereinwirkzone nachlaufende lokale Gaskühlung realisiert wird.

5.  Verfahren nach einem oder mehreren der Ansprüche 1 bis 4, **dadurch gekennzeichnet, dass** das Bauteil vor dem Gaslegieren mechanisch fixiert und während des Gaslegierens im fixierten Zustand gehalten wird.

6.  Verfahren nach einem oder mehreren der Ansprüche 1 bis 5, **dadurch gekennzeichnet, dass** die Fixier- und die Abkühlfunktion durch ein und dieselbe Vorrichtung realisiert wird.

7.  Verfahren nach einem oder mehreren der Ansprüche 1 bis 6, **dadurch gekennzeichnet, dass** die gaslegierte Randschicht nach dem Abkühlen auf Raumtemperatur mechanisch durch Gleitschleifen, Schleifen und/oder Polieren geglättet wird.

8.  Verfahren nach einem oder mehreren der Ansprüche 1 bis 7, **dadurch gekennzeichnet, dass** nach dem Abkühlen des Bauteiles auf Raumtemperatur bzw. nach dem mechanischen Glätten eine Auslagerungswärmebehandlung des gesamten Bauteiles bei einer Temperatur $T_A$ mit 350°C $\leq T_A \leq$ 700°C bei einer Auslagerungszeit $t_A$ von 2 h $\leq t_A \leq$ 24 h ausgeführt wird.

9.  Verfahren nach einem oder mehreren der Ansprüche 1 bis 8, **dadurch gekennzeichnet, dass** nach dem mechanischen Glätten ein Spannungsarmglühen bei einer Temperatur $T_{SR}$ mit 300°C $\leq T_{SR} \leq$ 620°C und einer Zeitdauer $t_{SR}$ von 1 h $\leq t_{SR} \leq$ 10 h angeschlossen wird.

10. Verfahren nach einem oder mehreren der Ansprüche 1 bis 9, **dadurch gekennzeichnet, dass** die gaslegierte Schicht nach dem Auskühlen von der letzten Wärmebehandlung kugelgestrahlt wird.

11. Verschleißbeständiges und ermüdungsresistentes Bauteil aus einer Titanlegierung mit einer gaslegierten Randschicht hergestellt mit einem Verfahren nach einem der vorhergehenden der Ansprüche, **dadurch gekennzeichnet, dass** die verschleißbeständige Randschicht aus einer feinkörnigen Mischung von $\alpha$- und $\beta$-Titan-Körnern mit interstitiell gelöstem Stickstoff besteht, eine Oberflächenhärte $H_S$, gemessen auf der geschliffenen Oberfläche von 360 HV0,5 $\leq H_S \leq$ 500 HV0,5 oder einer Randschicht-Mikrohärte $H_R$ gemessen an einem polierten Querschliff 0,1 mm unter der Oberfläche von 360 HV0,1 $\leq H_R \leq$ 560 HV0,1 aufweist, sich über eine Tiefe $t_R$ von 0,1 mm $\leq t_R \leq$ 3,5 mm erstreckt und keine durch das Reaktionsgas erzeugten nitridischen Phasen enthält.

12. Verschleißbeständiges und ermüdungsresistentes Bauteil aus einer Titanlegierung nach Anspruch 11, **dadurch gekennzeichnet, dass** die verschleißbeständige Randschicht aus einem Spurmuster überlappender Einzelspuren besteht und der Spurüberlappungsgrad ü,

$$\ddot{u} = \frac{a - \dot{c}}{a}$$

(a $\hat{=}$ Spurbreite, c $\hat{=}$ Spurabstand)

$$0,5 \leq \ddot{u} \leq 0,9 \text{ beträgt.}$$

13. Verschleißbeständiges und ermüdungsresistentes Bauteil aus einer Titanlegierung nach Anspruch 11, **dadurch gekennzeichnet, dass** die Randschicht aus einer breiten Einzelspur besteht, die durch ein Oszillieren des Strahles der Energiequelle hoher Intensität quer zur Vorschubrichtung erzeugt wird.

14. Verschleißbeständiges und ermüdungsresistentes Bauteil aus einer Titanlegierung nach einem oder mehreren der Ansprüche von 11 bis 13, **dadurch gekennzeichnet, dass** das Bauteil eine erosions- oder tropfenschlagbelastete Turbinenschaufel verkörpert.

15. Verschleißbeständiges und ermüdungsresistentes Bauteil aus einer Titanlegierung nach Anspruch 14, **dadurch gekennzeichnet, dass** die verschleißbeständige Randschicht die Schaufeleintrittskante sowohl in Richtung Schaufelbauchseite als auch Schaufelrückenseite umfasst.

16. Verschleißbeständiges und ermüdungsresistentes Bauteil aus einer Titanlegierung nach einem oder mehreren der Ansprüche 11 bis 15, **dadurch gekennzeichnet, dass** die verschleißbeständige Randschicht aus überlappenden, parallel zur Eintrittskante liegenden Spuren besteht.

17. Verschleißbeständiges und ermüdungsresistentes Bauteil aus einer Titanlegierung nach einem oder mehreren der Ansprüche 11 bis 16, **dadurch gekennzeichnet, dass** die Reihenfolge der Spurerzeugung so gewählt wird, dass die Spuren jeweils abwechselnd zu der neutralen Faser bezüglich einer Biegung der Turbinenschaufel in der weichen Richtung angeordnet sind.

18. Verschleißbeständiges und ermüdungsresistentes Bauteil aus einer Titanlegierung nach Ansprüchen 11 bis 17, **dadurch gekennzeichnet, dass** die verschleißbeständige Randschicht aus zur Längsachse der Turbinenschaufel bzw. zu deren Eintrittskanten quer liegenden Spuren aufgebaut ist, die Spuren um die Eintrittskante herum reichen und die Oszillation des Strahles der Energiequelle hoher Intensität infolge einer oszillierenden Schwenkbewegung der Turbinenschaufel um die Schaufellängsachse erzeugt werden.

19. Verschleißbeständiges und ermüdungsresistentes Bauteil aus einer Titanlegierung nach einem oder mehreren der Ansprüche 11 bis 19, **dadurch gekennzeichnet, dass** die Schaufelfußseitige Spurfeldberandung in einem Winkel von 20-65° zur Eintrittskante verläuft.

20. Verschleißbeständiges und ermüdungsresistentes Bauteil aus einer Titanlegierung nach einem oder mehreren der Ansprüche 11 bis 19, **dadurch gekennzeichnet, dass** die Randschichthärte entsprechend den lokalen Belastungsbedingungen sowie dem Verhältnis von Verschleiß zu zyklischer Belastung entsprechend angepasst ist.

**Claims**

1. Method for producing wear-resistant and fatigue-resistant edge layers in titanium alloys by gas alloying, in which the gas alloying is carried out using nitrogen as a reaction gas using a laser, a non-vac electron beam unit as a high-intensity energy source or a plasma torch, which nitrogen is interstitially soluble in the titanium alloy used, wherein the partial pressure of the nitrogen in a working gas mixture with an inert gas is held at a volumetric proportion $V_N$ in the range of from 1 % to < 10 % such that no nitride titanium phases are produced and a maximum hardness of 560 HV is achieved 0.1 mm below the surface, measured at a cross section, and wherein the volumetric proportion $V_N$ of the nitrogen in the working gas mixture is altered during the processing and is adapted to the local load conditions and to the ratio of wear to cyclic stress and/or the volumetric proportion of the supplied nitrogen is selected in consideration of the track overlapping level ü and thus relatively low nitrogen contents are set in the case of relatively high track overlapping levels.

2. Method according to claim 1, **characterised in that** the gas-alloyed edge layer is subjected to an accelerated cooling.

3. Method according to claim 2, **characterised in that** the accelerated cooling is achieved by a self-quenching as a result of an external cooling of the untreated portions of the component during the gas alloying.

4. Method according to claim 2, **characterised in that** the accelerated cooling is achieved by a local gas cooling run-down of the laser treatment zone.

5. Method according to one of more of claims 1 to 4, **characterised in that** the component is mechanically fixed before the gas alloying and is held in the fixed state during the gas alloying.

6. Method according to one or more of claims 1 to 5, **characterised in that** the fixing and cooling are implemented by one and the same device.

7. Method according to one or more of claims 1 to 6, **characterised in that**, after being cooled to room temperature, the gas-alloyed edge layer is mechanically smoothed by vibratory finishing, grinding, and/or polishing.

8. Method according to one or more of claims 1 to 7, **characterised in that**, after the component is cooled to room temperature or after the mechanical smoothing, an aging heat treatment of the entire component is performed at a temperature $T_A$ of 350 °C $\leq T_A \leq$ 700° C for an aging period $t_A$ of 2 h $\leq t_A \leq$ 24 h.

9. Method according to one or more of claims 1 to 8, **characterised in that**, after the mechanical smoothing, a stress-free annealing is subsequently carried out at a temperature $T_{SR}$ of 300 °C $\leq T_{SR} \leq$ 620 °C and a period $t_{SR}$ of 1 h $\leq t_{SR} \leq$ 10 h.

10. Method according to one or more of claims 1 to 9, **characterised in that** the gas-alloyed layer is shot-blasted after completely cooling from the last heat treatment.

11. Wear-resistant and fatigue-resistant component made of a titanium alloy having a gas-alloyed edge layer produced by a method according to any of the preceding claims, **characterised in that** the wear-resistant edge layer is composed of a fine-grain mixture of $\alpha$-titanium grains and $\beta$-titanium grains having interstitially dissolved nitrogen, has a surface hardness $H_S$, measured on the ground surface, of 360 HV0.5 $\leq H_S \leq$ 500 HV0.5, or an edge layer microhardness $H_R$, measured at a polished cross section 0.1 mm below the surface, of 360 HV0.1 $\leq H_R \leq$ 560 HV0.1, extends over a depth $t_R$ of 0.1 mm $\leq tR \leq$ 3.5 mm, and does not contain any nitride phases produced by the reaction gas.

12. Wear-resistant and fatigue-resistant component made of a titanium alloy according to claim 11, **characterised in that** the wear-resistant edge layer is composed of a track pattern of overlapping individual tracks, and the track overlap rate ü

$$\ddot{u} = \frac{a - c}{a}$$

(a $\triangleq$ track width, c $\triangleq$ track spacing) is 0.5 $\leq$ ü $\leq$ 0.9.

13. Wear-resistant and fatigue-resistant component made of a titanium alloy according to claim 11, **characterised in that** the edge layer is composed of a wide individual track which is produced by oscillating a beam of the high-intensity energy source transversely to the feed direction.

14. Wear-resistant and fatigue-resistant component made of a titanium alloy according to one or more of claims 11 to 13, **characterised in that** the component represents a turbine blade subjected to erosion stress or droplet impingement stress.

15. Wear-resistant and fatigue-resistant component made of a titanium alloy according to claim 14, **characterised in that** the wear-resistant edge layer includes the leading edge of the blade both in the direction of the concave side of the blade and in the direction of the rear side of the blade.

16. Wear-resistant and fatigue-resistant component made of a titanium alloy according to one or more of claims 11 to 15, **characterised in that** the wear-resistant edge layer is composed of overlapping tracks which are parallel to the leading edge.

17. Wear-resistant and fatigue-resistant component made of a titanium alloy according to one or more of claims 11 to 16, **characterised in that** the sequence of track production is selected in such a way that the tracks are each arranged in an alternating manner with the neutral fibre with respect to a bending of the turbine blade in the pliant direction.

18. Wear-resistant and fatigue-resistant component made of a titanium alloy according to one or more of claims 11 to 17, **characterised in that** the wear-resistant edge layer is composed of tracks situated transversely to the longitudinal axis of the turbine blade or to the leading edges thereof, the tracks extend around the leading edge, and the oscillation of the beam from the high-intensity energy source is produced about the longitudinal axis of the blade as a result of an oscillating vibratory motion of the turbine blade.

19. Wear-resistant and fatigue-resistant component made of a titanium alloy according to one or more of claims 11 to 19, **characterised in that** a track field boundary on the blade foot side extends at an angle of from 20-65° with respect to the leading edge.

20. Wear-resistant and fatigue-resistant component made of a titanium alloy according to one or more of claims 11 to 19, **characterised in that** the edge layer hardness is correspondingly adapted according to the local load conditions and to the ratio of wear to cyclic load.

**Revendications**

1. Procédé de fabrication de couches marginales résistantes à l'usure et à la fatigue à partir d'alliages de titane par alliage au gaz, dans lequel l'alliage au gaz est effectué avec de l'azote comme gaz de réaction en utilisant un laser, une installation de bombardement électronique sans vide comme source d'énergie à haute intensité ou une torche à plasma, qui peut être dissous de manière interstitielle dans l'alliage de titane utilisé, dans lequel la pression partielle de l'azote dans un mélange de gaz de travail avec un gaz inerte est maintenue à un pourcentage volumique $V_N$ compris dans la plage de 1 % à < 10 % de sorte qu'aucune phase de titane nitrure ne soit produite et une dureté maximale de 560 HV, mesurée au niveau d'un polissage transversal à 0,1 mm en-dessous de la surface, soit atteinte, et dans lequel le pourcentage volumique $V_N$ de l'azote dans le mélange de gaz de travail est modifié pendant le traitement et adapté aux conditions de chargement locales ainsi qu'au rapport entre la sollicitation à l'usure et la sollicitation cyclique,
et/ou
le pourcentage volumique de l'azote apporté est sélectionné en tenant compte du taux de recouvrement de pistes ü, et des teneurs en azote inférieures sont réglées pour des taux de recouvrement de pistes supérieurs.

2. Procédé selon la revendication 1, **caractérisé en ce que** la couche marginale alliée au gaz est soumise à un refroidissement accéléré.

3. Procédé selon la revendication 2, **caractérisé en ce que** le refroidissement accéléré est obtenu par auto-refroidissement suite à un refroidissement externe des parties de composant non traitées pendant l'alliage au gaz.

4. Procédé selon la revendication 2, **caractérisé en ce que** le refroidissement accéléré est réalisé par un refroidissement au gaz local en aval de la zone d'action du laser.

5. Procédé selon une ou plusieurs des revendications 1 à 4, **caractérisé en ce qu'**avant l'alliage au gaz le composant est fixé mécaniquement et maintenu à l'état fixé pendant l'alliage au gaz.

6. Procédé selon une ou plusieurs des revendications 1 à 5, **caractérisé en ce que** la fonction de fixation et de refroidissement est réalisée par un seul et même dispositif.

7. Procédé selon une ou plusieurs des revendications 1 à 6, **caractérisé en ce qu'**après refroidissement à la température ambiante, la couche marginale alliée au gaz est lissée mécaniquement par tribofinition, meulage et/ou polissage.

8. Procédé selon une ou plusieurs des revendications 1 à 7, **caractérisé en ce qu'**après le refroidissement du composant à la température ambiante ou après le lissage mécanique, un traitement thermique de durcissement du composant entier est effectué à une température $T_A$, avec 350 °C $\leq T_A \leq$ 700 °C pendant un temps de durcissement $t_A$ de 2 h $\leq t_A \leq$ 24 h.

9. Procédé selon une ou plusieurs des revendications 1 à 8, **caractérisé en ce que** le lissage mécanique est suivi d'un revenu de détente à une température $T_{SR}$, avec 300 °C $\leq T_{SR} \leq$ 620 °C et une durée $t_{SR}$ de 1 h $\leq t_{SR} \leq$ 10 h.

10. Procédé selon une ou plusieurs des revendications 1 à 9, **caractérisé en ce que** la couche alliée au gaz subit un grenaillage après refroidissement à l'issue du dernier traitement thermique.

11. Composant résistant à l'usure et à la fatigue, en alliage de titane, avec une couche marginale alliée au gaz fabriquée par un procédé selon l'une quelconque des revendications précédentes, **caractérisé en ce que** la couche marginale résistante à l'usure se compose d'un mélange de grains fins de grains de titane α et β avec de l'azote dissous de manière interstitielle, présente une dureté de surface $H_S$ mesurée sur la surface poncée de 360 HV0,5 $\leq H_S \leq$ 500 HV0,5 ou d'une micro-dureté de couche marginale $H_R$, mesurée au niveau d'un polissage transversal à 0,1 mm en-dessous de la surface, de 360 HV0,1 $\leq H_R \leq$ 560 HV0,1, s'étend à une profondeur $t_R$ de 0,1 mm $\leq t_R \leq$ 3,5 mm et ne contient aucune phase de nitrure produite par le gaz de réaction.

12. Composant résistant à l'usure et à la fatigue, en alliage de titane selon la revendication 11, **caractérisé en ce que** la couche marginale résistante à l'usure se compose d'un motif de pistes composé de pistes individuelles qui se recouvrent et **en ce que** le taux de recouvrement de pistes ü, $\ddot{u} = \frac{a-c}{a}$ (a $\triangleq$ largeur de piste, c $\triangleq$ espacement de pistes) est de 0,5 $\leq$ ü $\leq$ 0,9.

13. Composant résistant à l'usure et à la fatigue, en alliage de titane selon la revendication 11, **caractérisé en ce que** la couche marginale se compose d'une piste individuelle large produite par une oscillation du faisceau de la source d'énergie à haute intensité transversalement à la direction d'avance.

14. Composant résistant à l'usure et à la fatigue, en alliage de titane, selon une ou plusieurs des revendications 11 à 13, **caractérisé en ce que** le composant réalise une aube de turbine sollicitée en érosion ou en impact de gouttes.

15. Composant résistant à l'usure et à la fatigue, en alliage de titane, selon la revendication 14, **caractérisé en ce que** la couche marginale résistante à l'usure comprend le bord d'attaque de l'aube aussi bien en direction du côté intrados de l'aube que du côté extrados de l'aube.

16. Composant résistant à l'usure et à la fatigue, en alliage de titane, selon une ou plusieurs des revendications 11 à 15, **caractérisé en ce que** la couche marginale résistante à l'usure est composée de pistes se chevauchant et situées parallèlement au bord d'attaque.

17. Composant résistant à l'usure et à la fatigue, en alliage de titane, selon une ou plusieurs des revendications 11 à 16, **caractérisé en ce que** l'ordre de la génération des pistes est sélectionné de telle sorte que les pistes sont disposées respectivement en alternance avec l'axe neutre par rapport à une courbure de l'aube de turbine dans la direction faible.

18. Composant résistant à l'usure et à la fatigue, en alliage de titane, selon les revendications 11 à 17, **caractérisé en ce que** la couche marginale résistante à l'usure est constituée par des pistes transversales à l'axe longitudinal de l'aube de turbine ou aux bords d'attaque de celle-ci, **en ce que** les pistes entourent le bord d'attaque, et **en ce que** l'oscillation du faisceau de la source d'énergie à haute intensité est produite suite à un mouvement de pivotement oscillant de l'aube de turbine autour de l'axe longitudinal de l'aube.

19. Composant résistant à l'usure et à la fatigue, en alliage de titane, selon une ou plusieurs des revendications 11 à 19, **caractérisé en ce que** la bordure de champ de piste du côté du pied de l'aube s'étend selon un angle de 20 à 65° par rapport au bord d'attaque.

20. Composant résistant à l'usure et à la fatigue, en alliage de titane, selon une ou plusieurs des revendications 11 à 19, **caractérisé en ce que** la dureté de couche marginale est adaptée selon les conditions de sollicitation locales ainsi que le rapport entre l'usure et la sollicitation cyclique.

Fig. 1: Abhängigkeit der Kavitationsverschleißrate $\Delta\dot{m}$ vom Stickstoffgehalt $V_N$ im Arbeitsgas

EP 1 769 099 B1

**Fig 2a.**

**Fig 2b.**

Fig 2: Querschnitt einer lasergaslegierten Eintrittskante

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3917211
- EP 0491075 B1
- EP 0697503 A1
- US 5573604 A
- JP 56047560 B
- EP 0829325 A

**In der Beschreibung aufgeführte Nicht-Patentliteratur**

- **H. W. BERGMANN.** Thermochemische Behandlung von Titan und Titanlegierungen durch Laserumschmelzen und Gaslegieren. *Zeitschrift für Werkstofftechnik,* 1985, vol. 16, 392-405
- **VON J.M. ROBINSON.** Cavitation erosion of laser melted and laser nitrided Ti-6Al-4V. *Materials Science and Technology,* Juni 1995, vol. 11